(19) **Europäisches Patentamt**

**European Patent Office**

**Office européen des brevets**

(11) Numéro de publication: **0 148 522**
**B1**

(12) **FASCICULE DE BREVET EUROPÉEN**

(45) Date de publication du fascicule du brevet:
19.04.89

(51) Int. Cl.⁴: **A 01 C 1/06,** A 01 N 59/06

(21) Numéro de dépôt: **84201768.3**

(22) Date de dépôt: **30.11.84**

(54) Semences enrobées et procédé pour leur obtention.

(30) Priorité: **12.12.83 FR 8319981**

(43) Date de publication de la demande:
**17.07.85 Bulletin 85/29**

(45) Mention de la délivrance du brevet:
**19.04.89 Bulletin 89/16**

(84) Etats contractants désignés:
**AT BE CH DE GB IT LI NL SE**

(56) Documents cité:
**EP-A-0 017 193**
**US-A-3 852 913**

(73) Titulaire: **INTEROX Société Anonyme, Rue du Prince Albert, 33, B-1050 Bruxelles (BE)**

(72) Inventeur: **Gago, Ignace, Chaussée de Nivelles 53, B-1420 Braine- l'Alleud (BE)**
Inventeur: **Detroz, René, Chaussée de Louvain 534, B-1328 Ohain (BE)**

(74) Mandataire: **Lederer, Franz, Dr., Van der Werth, Lederer & Riederer Patentanwälte Lucile- Grahn-Strasse 22, D-8000 München 80 (DE)**

## Description

La présente invention concerne des semences enrobées et un procédé pour l'obtention de semences enrobées.

L'enrobage des semences est une pratique devenue courante. Il vise notamment à améliorer les caractéristiques de germination, à fournir divers additifs susceptibles d'intervenir à un moment quelconque de l'établissement et de la croissance des plantes, à protéger les semences ou encore à donner à la semence une forme ou une dimension qui conviennent pour le semis automatique. On à ainsi proposé d'enrober des semences au moyen de matières nutritives, de charges, de fongicides, d'herbicides, d'insecticides, etc.

On a aussi proposé pour améliorer le pouvoir germinatif des semences de betteraves (Brevet belge 859 566 déposé le 11 octobre 1977 au nom de la Demanderesse) d'incorporer du peroxyde de calcium à l'enrobant.

Les procédés connus d'enrobage présentent cependant de nombreux inconvénients.

Il est fréquent que l'enrobant n'adhère pas convenablement à la semence de sorte qu'il ne résiste pas aux diverses manutentions auxquelles sont soumises les semences. Ce phénomène est particulièrement sensible pour les semences à prise d'eau rapide. En effet, au cours de l'enrobage, on observe fréquemment un gonflement important de certaines semences dû à l'absorption d'eau. Après séchage, la semence se contracte pour reprendre sa dimension initiale tandis que l'enrobant ne se contracte en général pas dans les mêmes proportions; de ce fait il n'adhère plus convenablement à la semence et il se fragilise, se délite ou se désagrège.

Certains enrobants par contre sont tellement durs et résistants qu'ils ne se dissolvent ni ne se désagrègent facilement sous l'action de l'humidité et de l'eau une fois la semence mise en place, ce qui est également néfaste.

Au cours de l'enrobage, on à recours à de petites quantités d'eau notamment pour humecter les semences avant l'enrobage proprement dit pour solubiliser ou disperser au moins l'un des agents constitutifs de l'enrobage ou encore pour solubiliser ou disperser les agents collants utilisés pour assurer l'adhérence des autres agents constitutifs de l'enrobage. La présence d'eau présente des inconvénients qui sont particulièrement importants lorsque les semences sont mal protégées et absorbent rapidement l'eau. En effet, certaines semences peuvent absorber de l'eau au cours de l'enrobage ce qui peut conduire à une initiation prématurée de la germination de sorte que les semences ne peuvent plus être stockées. Par ailleurs, il n'est souvent pas possible de sécher correctement la semence sous la couche d'enrobant ce qui entraîne des risques de dégradation au cours du stockage. Ces effets sont particulièrement sensibles lorsque les semences mises en oeuvre sont des semences de légumineuses, de maïs et de crucifères.

De plus, certains agents constitutifs de l'enrobant, qui dans l'ensemble présentent des propriétés intéressantes, peuvent avoir des effets secondaires de phytotoxicité pour certaines semences.

Enfin, dans certains cas, il est malaisé d'enrober les semences de manière uniforme car leurs surfaces sont peu régulières et ne permettent pas un accrochage uniforme des enrobants. Les agents collants qu'on utilise habituellement pour faire adhérer les autres agents constitutifs de l'enrobant à la semence ne permettent pas de pallier simultanément tous ces inconvénients.

L'EP-A-0 017 193 divulgue un procédé pour l'obtention de semences enrobées dans lequel on traite les semences au moyen d'une phase aqueuse, on les enrobe au moyen d'un enrobant contenant un composé peroxydé et un polymère hydrophile et on sèche après la fabrication les semences obtenues.

La présente invention vise à procurer des semences enrobées ainsi qu'un procédé pour leur obtention qui ne présentent pas les inconvénients respectifs des semences et des procédés connus.

Dans les semences enrobées selon l'invention, l'enrobant est très résistant notamment à la fragilisation et au délitage à sec et il adhère bien aux semences de sorte que la tenue des semences enrobées au stockage est excellente. L'enrobant se délite, se désagrège ou se dissout sous l'action de l'humidité ou de l'eau lorsque les semences sont mises en place dans leur milieu de culture. En outre, il n'exerce pas d'effet phytotoxique et il permet d'éviter une germination prématurée des semences.

Les semences enrobées selon l'invention présentent un taux de germination excellent et on observe une réduction sensible du temps nécessaire à l'émergence des germes. Lorsque l'enrobage contient des additifs actifs, ceux-ci sont libérés lentement ce qui permet de maintenir leur activité pendant une période assez longue. En outre, l'invention procure des semences pouvant contenir des produits phytosanitaires ce qui permet d'éviter de procéder, au moment du semis, à des manipulations de produits qui, souvent, présentent une certaine toxicité pour les utilisateurs.

Le procédé selon l'invention présente l'avantage de ne pas nécessiter l'emploi d'eau au cours de l'enrobage des semences et ainsi d'éviter tous les inconvénients liés à son utilisation.

La présente invention concerne à cet effet des semences enrobées par un enrobant anhydre contenant un composé peroxydé dans lesquelles l'enrobant contient en outre un polyester sélectionné parmi les plymères de la ε-caprolactone.

Par polyesters dont la température de fusion est basse on de entend désigner ceux dont la température de fusion ne dépasse pas 80°C et de préférence pas 60°C. En général, les polyesters sont choisis parmi ceux dont la température de fusion est inférieure à 60°C.

Divers types de polyesters conviennent. Les polyesters à bas point de fusion conviennent généralement bien, notamment ceux dont la température de fusion n'excède pas 80°C, et de préférence 60°C. Les polyesters peuvent être des homopolymères ou des copolymères. Les polyesters sont choisis parmi les homo- et co-polymères de la ε-caprolactone.

Les copolymères de lactones peuvent contenir divers types d'unités comonomériques. En général, il s'agit de copolymères d'une lactone avec un oxyde d'oléfine tel que l'oxyde d'éthylène ou l'oxyde de propylène, avec un lactame tel que le caprolactame, avec une autre lactone, ou encore avec un mélange d'un glycol tel que l'éthylène glycol et d'un diacide carboxylique de préférence acyclique tel que l'acide adipique. Les copolymères de lactones peuvent contenir des quantités variables d'unités monomériques dérivées de la lactone. En général, ils contiennent au moins 10 % et le plus souvent au moins 20 % de leur poids d'unités monomériques dérivées de la lactone. Cette proportion ne dépasse le plus souvent pas 95 % et de préférence pas 90 % du poids du polymère.

Les polyesters du type homopolymères conviennent bien. Les homopolymères de ε-caprolactone ont donné d'excellents résultats.

Les polyesters selon l'invention peuvent avoir des masses molaires moyennes variables. En général leur masse molaire moyenne est d'au moins 300 et le plus souvent d'au moins 500. En général leur masse molaire moyenne ne dépasse pas 60 000 et le plus souvent pas 50 000. D'excellents résultats ont été obtenus avec des polyesters de masse molaire moyenne d'environ 800 à environ 10 000.

Tous les types de composés peroxydés organiques ou inorganiques peuvent être mis en oeuvre dans l'enrobant des semences selon l'invention. Des mélangés de composés peroxydés conviennent également. Parmi les composés peroxydés organiques pouvant être utilisés, figurent des composés tels que le peroxyde de benzoyle et ses dérivés halogénés, les perbenzoates d'alkyle comme le perbenzoate de tert-butyle, l'hydroperoxyde de p-menthane ainsi que les produits d'addition du peroxyde d'hydrogène comme le peroxyde d'urée. Les composés peroxydés inorganiques sont en général choisis parmi les persels tels que les perborates, percarbonates, persulfates, perphosphates de métaux alcalins ou alcalino-terreux et les peroxydes métalliques. Le plus souvent, on préfère utiliser des composés peroxydés inorganiques tels que les peroxydes métalliques plus particulièrement des peroxydes de métaux alcalino-terreux. De très bons résultats ont été obtenus en utilisant les peroxydes de calcium ou de magnésium. Les meilleurs résultats ont été obtenus avec le peroxyde de calcium.

Quand il s'agit du peroxyde de calcium, on utilise en général un produit commercial contenant de 30 à 90 % en poids de peroxyde de calcium, le solde étant constitué notamment d'hydroxyde de calcium et éventuellement d'un sel de calcium et d'eau. D'autres qualités de peroxyde de calcium peuvent également convenir.

L'enrobant peut également contenir des additifs divers. Il peut ainsi contenir des charges de type organique ou minéral. On peut également y incorporer des mélanges de charges. Les charges sont des poudres fines ayant en général une granulométrie telle qu'elles passent au travers d'un tamis de 170 et de préférence de 325 mesh (U.S. Standard). Comme charges de type organique on utilise en général des produits naturels à base de cellulose tels que la poudre dérivée du bois ou la farine de tourbe. Comme charges de type inorganique ou minéral on utilise des produits à base de silice, de silicates, de carbonates, de sels de calcium. On utilise en général des charges choisies parmi la silice broyée ou précipitée, le sable broyé, la bentonite, le talc, le kaolin, les terres à diatomées, les terres à foulon, la vermiculite, l'argile, le calcaire, la craie, le carbonate de calcium, l'oxyde de calcium, l'hydroxyde de calcium, le plâtre et leurs mélanges. En général, on utilise des charges non phytotoxiques.

L'enrobant peut également contenir un ou plusieurs autres additifs tels que des produits phytosanitaires, plus particulièrement des insecticides, nématicides, fongicides, désinfectants, répulsifs, herbicides et régulateurs de croissance, des agents permettant de préserver les semences contre les effets nocifs des herbicides sélectifs tels que le charbon actif, des agents nutritifs (engrais), des agents susceptibles d'améliorer la germination et la qualité des produits, des bactéries susceptibles d'influencer favorablement la germination, l'établissement ou la croissance des plantes, etc.

De bons résultats sont obtenus lorsque l'enrobant contient un agent nutritif.

De bons résultats sont obtenus lorsque l'enrobant contient des produits phytosanitaires et plus particulièrement des fongicides. Des exemples de fongicides adéquats sont donnés dans la Liste des Produits Phytopharmaceutiques publiée par le Ministère de l'Agriculture, Service de la Protection des Végétaux, Bruxelles, 1968 et 1981 et dans l'Index Phytosanitaire publié par l'ACTA, Paris, 1981, pages 195 à 268. L'acétate de méthoxyéthylmercure, le bénomyl, le captane, l'oxyquinoléate de cuivre, le thirame, le thiabendazole, l'éthyrimol le manèbe et le captafol conviennent bien. De bons résultats ont été obtenus avec le bénomyl, le captane et l'acétate de méthoxyéthylmercure.

La dose totale d'enrobant peut varier dans de très larges limites selon le type de semences, leurs formes et leurs dimensions. La dose totale d'enrobant est en général d'au moins 0,0001 fois le poids des semences. Le plus souvent, cette dose ne dépasse pas 100 fois le poids des semences sans que cette limite ne soit critique. Lorsqu'il n'est pas nécessaire de donner aux semences enrobées une forme ou des dimensions prédéterminées, la dose d'enrobant est le plus souvent d'au moins 0,01 et de préférence d'au moins 0,1 % du poids des semences et elle ne dépasse en général pas 300 % et de préférence pas 200 % de leur poids. Lorsqu'on désire donner aux semences une forme et des dimensions prédéterminées, la dose d'enrobant est en général d'au moins 0,5 et le plus souvent d'au moins 1 fois le poids des semences et elle ne dépasse en général pas 100 et le plus souvent 50 fois leur poids.

Les doses de polyesters dans l'enrobant selon l'invention peuvent être très variables. Elles peuvent être de 0,01 à 90 % du poids total de l'enrobant. En général la teneur en polyesters représente de 1 à 60 % du poids de l'enrobant si on en exclut les charges.

La quantité de composé peroxydé présente dans l'enrobant peut varier dans de larges limites. Elle est en général comprise entre 0,1 et 99 % du poids total de l'enrobant. Le plus souvent l'enrobant contient de 1 à 90 % en poids de composé peroxydé. De bons résultats ont été obtenus lorsque la teneur en composé peroxydé représente de 10 à 80 % du poids de l'enrobant si on en exclut les charges.

La teneur en charges peut varier dans de très larges limites. Elle est en général comprise entre 0 et 99 % du poids total de l'enrobant et de préférence entre 0,1 et 99 % du poids total de l'enrobant. Des teneurs comprises entre 1 et 98 % conviennent bien.

Les autres additifs peuvent être présents dans des proportions variables pouvant aller jusqu'à 95 % du poids de l'enrobant. La teneur en ces autres additifs est en général de 0,00001 à 95 % du poids de l'enrobant. En général la teneur en ces autres additifs représente de 0,1 à 95 %, et le plus souvent de 5 à 90 %, du poids de l'enrobant si on en exclut les charges.

Des enrobants particulièrement avantageux peuvent ainsi contenir de 5 à 60 % en poids de polyesters selon l'invention, et de 40 à 95 % en poids de composés peroxydés, l'enrobant étant présent en quantités de 0,01 à 200 % du poids des semences non enrobées. Ces enrobants peuvent en outre contenir jusqu'à 20 % et le plus souvent de 0,1 à 20 % de leur poids d'additifs divers.

D'autres enrobants égalememt avantageux peuvent contenir de 0,1 à 50 % en poids de polyesters selon l'invention, de 30 à 75 % en poids de composés peroxydés et de 20 à 60 % en poids d'additifs divers, l'enrobant étant présent en quantités de 0,01 à 300 % du poids des semences non enrobées.

D'autres enrobants particulièrement avantageux peuvent contenir de 0,1 à 20 % en poids de polyesters selon l'invention, de 0,1 à 30 % en poids de composés peroxydés, de 30 à 99,7 % en poids de charges et de 0,01 à 30 % en poids d'autres additifs, l'enrobant étant présent en quantités de 0,5 à 100 fois le poids des semences non enrobées. Ces derniers conviennent lorsqu'on désire conférer aux semences une forme ou une dimension prédéterminée.

L'invention peut être appliquée à divers types de semences, telles que les semences de légumineuses, de graminées ou de dicotylédones. En général, on l'utilise pour les semences de légumineuses telles que les diverses sortes de pois, de haricots et de lentilles, la luzerne, le trèfle, la vesce, le soja, l'arachide, la féverole et le lupin, les semences de graminées telles que le ray grass et les céréales (maïs, avoine, seigle, froment, millet, sorgo, orge, riz, etc.), les semences de dicotylédones telles que la chicorée, la laitue, le tabac, la tomate, la carotte, les choux et le colza et les semences de crucifères telles que le radis. On obtient de bons résultats avec des semences de légumineuses telles que les semences de pois et de soja et avec des semences de graminées telles que l'orge, l'avoine et l'escourgeon.

La présente invention concerne également un procédé pour l'enrobage des semences. Selon l'invention, on malaxe les semences en l'absence d'eau avec le composé peroxydé, on y applique une couche de polyester à l'état liquide ou fondu en l'absence d'eau et on solidifie le polyester sur les semences. L'application de la couche de polyester peut être opérée selon diverses techniques telles que l'immersion des semences dans un bain contenant le polyester ou encore la pulvérisation du polyester sur les semences. La technique d'application par pulvérisation est préférée.

Selon un mode d'exécution particulier de l'invention, on imprime aux semences un mouvement rotatif, on les malaxe avec le composé peroxydé et on les enrobe avec le polyester.

Pour imprimer le mouvement rotatif aux semences, tout procédé et plus particulièrement tout appareil à enrober permettant de réaliser un tel mouvement tels que des rubans, des conteneurs de diverses formes, des appareils à sphère ou à cylindre ouverts, des appareils utilisés pour le mélange de liquides ou de solides, des granulateurs, des tambours rotatifs, des soles tournantes, conviennent pour réaliser le procédé selon l'invention.

En général, on utiliser des appareils à bords arrondis ou spériques qui peuvent être inclinés sur leur axe.

De préférence, on utilise un conteneur à bords arrondis animé d'un mouvement planétaire et dont l'axe de rotation peut être incliné de 0 à 90 par rapport à la verticale.

En général, les polyesters contenus dans l'enrobant sont choisis parmi ceux dont la température de fusion est inférieure à 80 C, de préférence 60°C.

L'enrobage peut se faire selon diverses techniques. Le polyester peut être mis en oeuvre tel quel à l'état liquide ou fondu ou sous forme de solution dans un solvant organique.

Une technique particulière consiste à traiter les semences au moyen du composé peroxydé et au moyen du polyester à l'état liquide ou fondu. Selon cette technique particulière, on sélectionne le polyester parmi ceux dont la température de fusion est inférieure à 80°C, de préférence 60°C. On peut ainsi appliquer sur les semences le polyester et, simultanément, consécutivement ou en alternance, ajouter le composé peroxydé. On peut aussi, si nécessaire, ajouter des charges ou autres additifs éventuels à un moment quelconque de l'enrobage. En général, on applique sur les semences le polyester à l'état liquide ou fondu et ensuite on ajoute le composé peroxydé et les charges ou autres additifs éventuels. L'introduction du polyester à l'état liquide ou fondu peut se poursuivre pendant l'introduction du composé peroxydé et des charges ou autres additifs éventuels. On peut interrompre l'introduction du composé peroxydé et des charges ou autres additifs éventuels une ou plusieurs fois et procéder dans l'intervalle à une nouvelle application de polyesters à l'état liquide ou fondu et cela jusqu'à l'enrobage complet des semences.

Selon cette technique particulière, l'appareillage d'enrobage des semences doit être préchauffé à une température comprise entre 45 et 80°C de façon à maintenir le polyester à son point de ramollissement. Le polyester est pulvérisé sur les semences en rotation dans l'appareillage d'enrobage au moyen de tout dispositif capable de le diviser en fines gouttelettes, par exemple au moyen d'un pistolet pneumatique.

Dans le procédé selon l'invention, le polyester est porté dans le réservoir du dispositif de pulvérisation à une température suffisante pour le maintenir à l'état fondu. La température de l'appareillage d'enrobage et celle du dispositif de pulvérisation ne sont pas critiques et dépendent de la nature du polyester. Elles sont cependant à déterminer soigneusement dans chaque cas pour le polyester particulier utilisé et sont en relation directe avec les températures de ramollissement et de fusion dudit polyester. En général, la température du dispositif de pulvérisation est réglée dans une plage de 10 à 40°C supérieure à la température de ramollissement du polyester particulier utilisé et de préférence 20 à 30°C supérieure à cette température. La température de l'appareillage d'enrobage est le plus souvent sélectionnée dans la plage de 0,5 à 10°C supérieure à la température de ramollissement du polyester particulier utilisé et de préférence de 1 à 5°C supérieure à cette température.

Une autre technique consiste à mettre en oeuvre le polyester sous la forme d'une solution dans un solvant organique. La suite des opérations est similaire à celles utilisées pour l'enrobage à l'intervention de polyesters à l'état liquide ou fondu.

Divers solvants organiques peuvent être utilisés à cette fin. Ils sont en général choisis parmi les solvants organiques comportant des groupes aromatiques ou les solvants organiques substitués par des halogènes tels que le chlore et le brome, des groupes nitro, des groupes carbonyles, des groupes carboxyles, des groupes esters et des groupes alkoxy. On peut également utiliser des mélanges de solvants. On peut ainsi utiliser des mélanges des solvants précités entre eux ou avec des alcools. Les solvants sont le plus souvent choisis parmi les composés organiques contenant de 1 à 12 atomes de carbone; quand il s'agit de composés aromatiques leur nombre d'atomes de carbone est de 4 à 12. Les alcools contiennent en général de 1 à 8 atomes de carbone.

De bons résultats ont été obtenus avec des solvants halogénés ou plus particulièrement des solvants chlorés seuls ou en mélange avec des alcools.

Les meilleurs résultats ont été obtenus avec un chlorométhane tel que le chlorure de méthylène seul ou en mélange avec un alcool tel que le méthanol.

Les solutions de polyesters peuvent contenir des quantités variables de polyesters. En général, pour des raisons économiques, on utilise des solutions dont la concentration est égale à ou voisine de la saturation. De bons résultats sont obtenus avec des solutions contenant de 10 à 60 % de leur poids de polyesters.

Après enrobage, les semences sont étalées en couche de faible épaisseur sur une surface plane.

Lorsque le polyester est mis en oeuvre sous forme de solution, les semences sont en outre séchées après enrobage pour évacuer le solvant encore présent dans l'enrobant. Le séchage peut se faire selon toute technique connue en elle-même telle que par passage d'un courant d'air forcé éventuellement chauffé sur les semences qui peuvent être disposées à cette fin dans des appareils tels que des tamis, ou encore par séchage par ventilation naturelle.

Afin d'illustrer l'invention sans pour autant en limiter la portée, on donne ci-après des exemples pratiques de réalisation.

### Exemples 1R à 2

Enrobage et germination des semences de soja

Dans un tambour circulaire de 40 cm de diamètre, à bords arrondis, animé d'un mouvement rotatif de 50 t/min, on à introduit 200 g de semences de soja de variété Corsoy. On a ensuite réglé l'inclinaison de l'axe de rotation du tambour de façon à lui donner un angle de 60° avec la verticale.

Au moyen d'un pulvérisateur pneumatique du type pistolet à peinture équipé d'une tête de pulvérisation à pointeau de 3 mm de diamètre, on a pulvérisé en trois admissions successives un total de 0,28 g d'une solution contenant 50 % en poids de poly-$\varepsilon$-caprolactone et de 50 % de chlorure de méthylène ($CH_2Cl_2$).

Lorsque les semences ont été légèrement et régulièrement recouvertes de polycaprolactone, on a commencé à introduire au moyen d'un dispositif doseur à vibreur dont le bec était situé à l'intérieur du tambour circulaire 20 g de poudre commerciale de peroxyde de calcium à 60 % en poids de CaO₂ de granulométrie moyenne de 8 m. Lorsque le débit de la poudre à été continu et régulier, on a pulvérisé en même temps à intervalles réguliers une quantité additionnelle de 2,52 g de la solution de polycaprolactone dans le $CH_2Cl_2$. On s'est arrangé pour ce faire de régler le débit de poudre de $CaO_2$ à 3 g/min.

Après incorporation de la totalité de la poudre de $CaO_2$, on à poursuivi la pulvérisation du reliquat de la solution de polycaprolactone après quoi on a encore laissé tourner le tambour pendant 2 min. L'ensemble de l'opération a duré en tout 15 min.

Les semences ainsi enrobées ont alors été extraites du tambour et étalées en couche de 2 cm d'épaisseur à température ambiante sur une plaque de porcelaine et sous une bonne ventilation pour assurer l'évaporation rapide et totale du $CH_2Cl_2$ encore présent dans l'enrobant. Après 30 min dans ces conditions, toute odeur de solvant s'était dissipée et les graines étaient prêtes à l'emploi.

Les semences enrobées ont ensuite été mises à germer sur papier filtre humide (exemple 2). Les essais de germination ont été réalisés à 20 - 22°C.

Un essai de germination de semences non enrobées à été réalisé à titre de comparaison (exemple 1R).

Les caractéristiques de l'enrobant et les résultats obtenus sont rassemblés au Tableau 1.

**Tableau 1**

| Exemples | 1R | 2 |
|---|---|---|
| Enrobant g/100 g semences | | |
| CAPA 520* | - | 5 |
| CaO₂ commercial (60 % en CaO₂) | - | 10 |
| Taux de germination, % | | |
| après 3 - 4 jours | 96 | 100 |
| Vigueur des plants, g/plant poids des plants | | |
| après 3 - 4 jours | 1,375 | 1,550 |

* polycaprolactone commercialisée par INTEROX

On n'observe aucune phytotoxicité sur les cotylédons par le peroxyde de calcium, contrairement aux enrobages exempt de polycaprolactone.

**Exemples 3R et 4**

Enrobage et germination de semences de pois

200 g de semences de pois Oberon ont été enrobées (exemple 4) au moyen d'une solution à 50 % en poids de polycaprolactone dans du chlorure de méthylène dans le même appareil et selon la même technique qu'à l'exemple 2.

Les semences enrobées ont été ensuite mises à germer sur papier filtre humide. Les essais de germination ont été réalisés à 20 - 22°C.

Un essai de germination de semences non enrobées a été réalisé à titre de comparaison (exemple 3R).

Les caractéristiques de l'enrobant et les résultats obtenus sont rassemblés au Tableau 2.

**Tableau 2**

| Exemples | 3R | 4 |
|---|---|---|
| Enrobant, g/100 g semences | | |
| CAPA 215* | - | 4,5 |
| CaO₂ commercial (60 % CaO₂) | - | 10 |
| Taux de germination, % | | |
| après 4 - 5 jours | 87 | 100 |
| Vigueur des plants, g/plant poids des plants | | |
| après 4 - 5 jours | 0,401 | 0,506 |

* polycaprolactone commercialisée par INTEROX

On n'observe aucune phytotoxicité sur les cotylédons par le peroxyde de calcium, contrairement aux enrobages exempt de polycaprolactone.

**Exemple 5**

Enrobage de semences de pois

Dans un tambour circulaire semblable à celui utilisé aux exemples précédents, on a introduit 200 g de semences de pois de variété Obéron. On a ensuite mis le tambour en rotation réglée à 50 t/min et on a chauffé les semences et la sole à environ 40°C au moyen d'un courant d'air chaud délivré par un ventilateur muni d'une résistance électrique de 1500 watts.

La quantité (3 g) de poly-ε-caprolactone à été fondue à 50°C et versée dans un dispostif de pulvérisation pneumatique analogue à celui des exemples précédents et dont le réservoir à été maintenu à 70°C au moyen d'une bande électrique chauffante enroulée à sa surface extérieure.

On à imprégné les senences d'une première couche régulière de 0,3 g de polycaprolactone après quoi on a commencé l'addition d'une poudre commerciale de peroxyde de calcium à 60 % de CaO$_2$ au moyen du même doseur vibrant qu'aux exemples précédents. L'addition de poudre à été réalisée avec un débit de 2 g/min conjointement avec la pulvérisation à intervalles réguliers de polycaprolactone de façon à assurer une enrobage régulier des semences.

L'enrobage à duré en totalité 20 min et a nécessité l'application de 3 g de polycaprolactone fondue.

L'opération terminée, les semences enrobées ont été extraites du tambour et étalées en couche de 5 cm d'épaisseur à température ambiante sur une plaque de porcelaine. Après refroidissement, les semences étaient prêtes à l'emploi.

**Revendications**

1. Semences enrobées par un enrobant contenant un composé peroxydé caractérisées en ce que l'enrobant contient en outre un polyester sélectionné parmi les polyméres de la ε-caprolactone.

2. Semences enrobées selon la revendication 1, caractérisées en ce que le composé peroxydé est un peroxyde d'un métal alcalino-terreux.

3. Semences enrobées selon la revendication 2, caractérisées en ce que le composé peroxydé est le peroxyde de calcium.

4. Semences enrobées selon la revendication 1 ou 2, caractérisées en ce qu'elles contiennent en outre um composé choisi parmi les charges, les produits phytosanitaires et les agents nutritifs.

5. Semences enrobées selon l'une quelconque des revendications 1 à 4, caractérisées en ce qu'elles contiennent un enrobant à des doses de 0,01 à 200 % du poids des semences non enrobées, l'enrobant contenant de 5 à 60 % en poids de polyesters et de 40 à 95 % en poids de composés peroxydés.

6. Semences enrobées selon l'une quelconque des revendications 1 à 4, caractérisées en ce qu'elles contiennent un enrobant à des doses de 0,01 à 300 % du poids des semences non enrobées, l'enrobant contenant de 0,1 à 50 % en poids de polyesters, de 30 à 75 % en poids de composés peroxydés et de 20 à 60 % en poids d'additifs divers.

7. Semences enrobées selon l'une quelconque des revendications 1 à 4, caractérisées en ce qu'elles contiennent un enrobant à des doses de 0,5 à 100 fois le poids des semences non enrobées, l'enrobant contenant de 0,1 à 20 % en poids de polyesters, de 0,1 à 30 % en poids de composés peroxydés, de 30 à 99,7 % en poids de charges et de 0,01 à 30 % en poids d'autres additifs.

8. Procédé pour l'obtention de semences enrobées par un enrobant anhydre contenant un composé peroxydé et un polyester, caractérisé en ce qu'on traite les semences au moyen d'un composé peroxydé et au moyen d'une solution du polyester dans un solvant organique.

9. Procédé pour l'obtention de semences enrobées par un enrobant anhydre contenant un composé peroxydé et un polyester, caractérisé en ce qu'on traite les semences au moyen d'un composé peroxydé et au moyen du polyester à l'état liquide ou fondu.

10. Procédé selon la revendication 8 ou 9 caractérisé en ce que le polyester est la ε-caprolactone.

**Patentansprüche**

1. Von einem wasserfreien, eine Peroxydverbindung enthaltenden Mantel umhüllte Samen, dadurch gekennzeichnet, daß der Mantel außerdem einen Polyester ausgewählt aus den Polymeren von ε-Caprolacton enthält.

2. Umhüllte Samen nach Anspruch 1, dadurch gekennzeichnet, daß die Peroxydverbindung ein Peroxyd eines Erdalkalimetalls ist.

3. Umhüllte Samen nach Anspruch 2, dadurch gekennzeichnet, daß die Peroxydverbindung Calciumperoxyd ist.

4. Umhüllte Samen nach Anspruch 1 oder 2, dadurch gekennzeichnet, daß sie außerdem eine Verbindung enthalten, die ausgewählt ist aus den Füllstoffen, den phytosanitären Produkten und den Nährstoffen.

5. Umhüllte Samen nach einem der Ansprüche 1 bis 4, dadurch gekennzeichnet, daß sie einen Mantel in einer Menge von 0,01 bis 200 % des Gewichts der nicht umhüllten Samen enthalten, wobei der Mantel von 5 bis 60 Gew.-% Polyester und von 40 bis 95 Gew.-% Peroxydverbindungen enthält.

6. Umhüllte Samen nach einem der Ansprüche 1 bis 4, dadurch gekennzeichnet, daß sie einen Mantel in einer Menge von 0,01 bis 300 % des Gewichts der nicht umhüllten Samen enthalten, wobei der Mantel von 0,1 bis 50 Gew.-% Polyester, von 30 bis 75 Gew.-% Peroxydverbindungen und von 20 bis 60 Gew.-% verschiedene Zusatzstoffe enthält.

7. Umhüllte Samen nach einem der Ansprüche 1 bis 4, dadurch gekennzeichnet, daß sie einen Mantel in einer Menge des 0,5- bis 100-fachen Gewichts der nicht umhüllten Samen enthalten, wobei der Mantel von 0,1 bis 20 Gew.-% Polyester, von 0,1 bis 30 Gew.-% Peroxydverbindungen, von 30 bis 99,7 Gew.-% Füllstoffe und von 0,01 bis 30 Gew.-% andere Zusatzstoffe enthält.

8. Verfahren zur Herstellung von von einem wasserfreien, eine Peroxydverbindung und einen Polyester enthaltenden Mantel umhüllten Samen, dadurch gekennzeichnet, daß man die Samen mit einer Peroxydverbindung und mit einer Lösung des Polyesters in einem organischen Lösungsmittel behandelt.

9. Verfahren zur Herstellung von von einem wasserfreien, eine Peroxydverbindung und einen Polyester enthaltenden Mantel umhüllten Samen, dadurch gekennzeichnet, daß man die Samen mit einer Peroxydverbindung und mit dem Polyester in flüssigem oder geschmolzenem Zustand behandelt.

10. Verfahren nach Anspruch 8 oder 9, dadurch gekennzeichnet, daß der Polyester ε-Caprolacton ist.

## Claims

1. Seeds coated with an anhydrous coating containing a peroxide characterized in that the coating in addition contains a polyester selected from the polymers of ε-caprolactone.

2. Coated seeds according to claim 1, characterized in that the peroxide is a peroxide of an alcaline earth metal.

3. Coated seeds according to claim 2, characterized in that the peroxide is calcium peroxide.

4. Coated seeds according to claim 1 or 2, characterized in that additionally they contain a compound selected among charges, phytosanitary products and nutritive agents.

5. Coated seeds according to one of claims 1 to 4, characterized in that they contain a coating in amounts of 0,01 to 200 % of the weight of the non-coated seeds, the coating containing from 5 to 60 % by weight polyester and from 40 to 95 % by weight peroxide.

6. Coated seeds according to one of claims 1 to 4, characterized in that they contain a coating in amounts of 0,01 to 300 % of the weight of the non-coated seeds, the coating containing from 0,1 to 50 % by weight polyester, from 30 to 75 % by weight peroxide and from 20 to 60 % by weight diverse additives.

7. Coated seeds according to one of claims 1 to 4, characterized in that they contain a coating in amounts of 0,5 to 100 fold of the weight of the non-coated seeds, the coating containing from 0,1 to 20 % by weight polyester, from 0,1 to 30 % by weight peroxide, from 30 to 99,7 % by weight charges and from 0,01 to 30 % by weight other additives.

8. Process for the production of seeds coated with an anhydrous coating containing a peroxide and a polyester, characterized in that the seeds are treated with a peroxide and a solution of the polyester in an organic solvent.

9. Process for the production of seeds coated with an anhydrous coating containing a peroxide and a polyester, characterized in that the seeds are treated with a peroxide and the polyester in liquid or molten state.

10. Process according to claim 8 or 9, characterized in that the polyester is ε-caprolactone.